# EUROPEAN PATENT APPLICATION

(11) **EP 3 297 209 A1**
(43) Date of publication of application: **21.03.2018**
(21) Application number: 16817007.4
(22) Date of filing: 26.04.2016
(51) Int. Cl.: H04L 12/14, H04W 4/24

(54) **METHOD OF IMPLEMENTING UPDATED CHARGING PLAN AND DEVICE UTILIZING SAME**

(30) Priority: 30.06.2015 CN 201510374143
(71) Applicant: Huawei Technologies Co., Ltd., Longgang District Shenzhen, Guangdong 518129 (CN)
(72) Inventor: MA, Enxiang, Shenzhen Guangdong 518129 (CN); WU, Gang, Shenzhen Guangdong 518129 (CN)
(74) Representative: Pfenning, Meinig & Partner mbB
(86) International application number: PCT/CN2016/080250
(87) International publication number: WO 2017/000643

(57) **Abstract**

The present invention discloses a charging rerating method. The method includes: obtaining, by a bill processing apparatus, at least two to-be-rerated bills, and grouping the bills, where each bill records information about apply charging AC, and the AC information includes sorting information of the AC and reservation amount information corresponding to the AC; sorting, by the bill processing apparatus, all AC in bills of a same group according to the sorting information of all the AC in the same group; and providing, by the bill processing apparatus, a charging apparatus with all the sorted AC in the bills of the same group, so that the charging apparatus rerates the bills of the same group according to the sorting and the reservation amount information of all the AC on a basis of each of all the AC.

## Description

This application claims priority to Chinese Patent Application No. 201510374143.3, filed with the Chinese Patent Office on June 30, 2015 and entitled "CHARGING RERATING METHOD AND APPARATUS", which is incorporated herein by reference in its entirety.

### TECHNICAL FIELD

The present invention relates to the field of communications technologies, and in particular, to a charging rerating processing method and apparatus.

### BACKGROUND

For a charging event that needs to sustain for a period of time, because online rating is at an apply charging (AC) level, when a single account has multiple concurrent sessions that need fee deduction, AC requests for the multiple sessions mutually overlap in terms of time and form resource (account balance) contention. However, rerating is based on an entire session, and an earlier call record S1 preferentially uses all types of resources during rerating.

Consequently, a rerated bill is rarely consistent with an online charging rating result even when results of tariff configuration and online charging rating are both correct.

### SUMMARY

Embodiments of the present invention provide a charging rerating apparatus and a charging rerating method, so as to resolve a problem of inconsistency between an existing rerating result and an online charging result.

According to a first aspect, a charging rerating method is provided, where the method includes: receiving, by a bill processing apparatus, a charging rerating request; obtaining, by the bill processing apparatus, at least two to-be-rerated bills, and grouping the bills, where associated bills are grouped into a same group, each bill records information about apply charging AC, and the AC information includes sorting information of the AC and reservation amount information corresponding to the AC; sorting, by the bill processing apparatus, all AC in bills of a same group according to the sorting information of all the AC in the same group; and providing, by the bill processing apparatus, a charging apparatus with all the sorted AC in the bills of the same group, so that the charging apparatus rerates the bills of the same group according to the sorting and the reservation amount information of all the AC on a basis of each of all the AC.

In a first possible implementation of the first aspect, the providing, by the bill processing apparatus, a charging apparatus with all the sorted AC in the bills of the same group specifically includes: replaying, one by one by the bill processing apparatus to the charging apparatus according to the sorting, AC events corresponding to all the AC in the bills of the same group.

With reference to the first possible implementation of the first aspect, in a second possible implementation, the replaying, one by one, AC events corresponding to all the AC in the bills of the same group specifically includes: creating a session between the bill processing apparatus and the charging apparatus according to the first AC in the bills of the same group, and then playing, one by one, remaining AC in the bills of the same group according to the sorting.

With reference to the first aspect or the first to the second possible implementations of the first aspect, in a third possible implementation, the reservation amount information corresponding to the AC specifically includes duration information corresponding to the AC or charging traffic volume information corresponding to the AC.

With reference to the first aspect or the first to the third possible implementations of the first aspect, in a fourth possible implementation, the method includes: if any two of the at least two to-be-rerated bills are not associated, skipping performing the grouping and sorting processing, and directly providing the charging apparatus with the at least two to-be-rerated bills, so that the charging apparatus rerates the at least two to-be-rerated bills on a basis of an entire bill.

With reference to the first aspect or the first to the fourth possible implementations of the first aspect, in a fifth possible implementation, the associated bills include bills of a same account, bills of a same community, or bills of a same customer.

With reference to the first aspect or the first to the fifth possible implementations of the first aspect, in a sixth possible implementation, the sorting information of the AC includes a start time of the AC, and the sorting all AC in bills of a same group according to the sorting information of all the AC in the same group specifically includes: sorting all the AC in the bills of the same group according to start time of all the AC in the same group.

With reference to the first aspect or the first to the fifth possible implementations of the first aspect, in a seventh possible implementation, the sorting information of the AC includes a unique serial number of the AC, and the sorting all AC in bills of a same group according to the sorting information of all the AC in the same group specifically includes: sorting all the AC in the bills of the same group according to unique serial numbers of all the AC in the same group.

According to a second aspect, a bill processing apparatus is configured to perform charging rerating processing and includes: a receiving unit, configured to receive a charging rerating request and obtain at least two to-be-rerated bills, where each bill records information about apply charging AC (apply charging), and the AC information includes sorting information of the AC and reservation amount information corresponding to the AC; a grouping and sorting unit, configured to: group the bills, where associated bills are grouped into a same group; and sort all AC in bills of a same group according to the sorting information of all the AC in the same group; and a bill provision unit, configured to provide a charging apparatus with all the sorted AC in the bills of the same group, so that the charging apparatus rerates the bills of the same group according to the sorting and the reservation amount information of all the AC on a basis of each of all the AC.

In a first possible implementation of the second aspect, that the bill provision unit provides a charging apparatus with all the sorted AC in the bills of the same group specifically includes: the bill provision unit replays, one by one to the charging apparatus according to the sorting, AC events corresponding to all the AC in the bills of the same group.

With reference to the first possible implementation of the second aspect, in a second possible implementation, the replaying, one by one, AC events corresponding to all the AC in the bills of the same group specifically includes: creating a session between the bill processing apparatus and the charging apparatus according to the first AC in the bills of the same group, and then playing, one by one, remaining AC in the bills of the same group according to the sorting.

With reference to the second aspect or the first to the second possible implementations of the second aspect, in a third possible implementation, the reservation amount information corresponding to the AC specifically includes duration information corresponding to the AC or charging traffic volume information corresponding to the AC.

With reference to the second aspect or the first to the third possible implementations of the second aspect, in a fourth possible implementation, the bill processing apparatus further includes a determining unit, configured to: when determining that any two of the at least two to-be-rerated bills are not associated, instruct the grouping and sorting unit to skip performing the grouping and sorting processing; and the bill provision unit is further configured to: provide the charging apparatus with the at least two to-be-rerated bills according to a result of the determining, so that the charging apparatus rerates the at least two to-be-rerated bills on a basis of an entire bill.

With reference to the second aspect or the first to the fourth possible implementations of the second aspect, in a fifth possible implementation, the associated bills include bills of a same account, bills of a same community, or bills of a same customer.

With reference to the second aspect or the first to the fifth possible implementations of the second aspect, in a sixth possible implementation, the sorting information of the AC includes a start time of the AC; that the sorting and grouping unit sorts all AC in bills of a same group according to the sorting information of all the AC in the same group specifically includes: the sorting and grouping unit sorts all the AC in the bills of the same group according to start time of all the AC in the same group.

With reference to the second aspect or the first to the fifth possible implementations of the second aspect, in a seventh possible implementation, the sorting information of the AC includes a unique serial number of the AC; that the sorting and grouping unit sorts all AC in bills of a same group according to the sorting information of all the AC in the same group specifically includes: the sorting and grouping unit sorts all the AC in the bills of the same group according to unique serial numbers of all the AC in the same group.

In the foregoing embodiments, bills of a same group are sorted according to AC, and rerating is performed based on sorted AC. In this way, correctness in a rerating process is ensured, and rerating accuracy is improved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is an architectural diagram of a charging rerating system according to an embodiment of the present invention;
FIG. 2 is a schematic structural diagram of a bill processing apparatus 200 according to an embodiment of the present invention;
FIG. 3 is a schematic structural diagram of a bill processing apparatus 300 according to another embodiment of the present invention;
FIG. 4 is a schematic rerating flowchart according to another embodiment of the present invention;
FIG. 5 is an example diagram of a bill according to an embodiment of the present invention; and
FIG. 6 is a schematic flowchart of AC replay according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

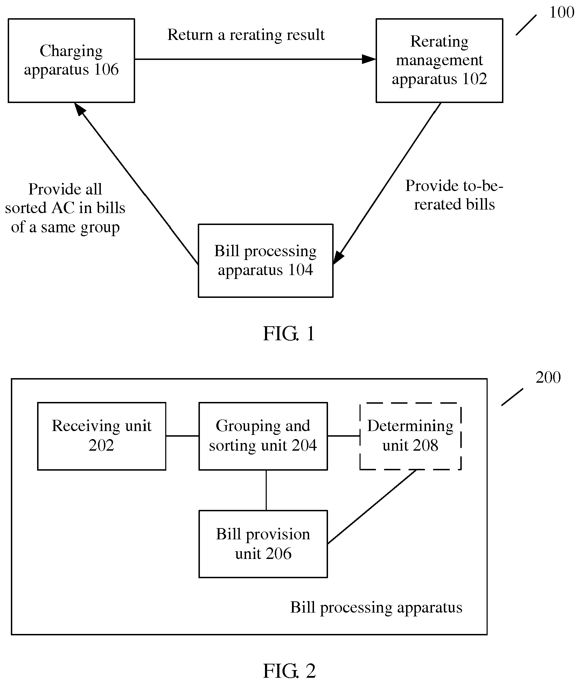

FIG. 1 is an architectural diagram applicable to a charging rerating system 100 according to an embodiment of the present invention. As shown in FIG. 1, the system includes a rerating management apparatus 102, a bill processing apparatus 104, and a charging apparatus 106.

The rerating management apparatus 102 is configured to receive a rerating request, send the rerating request to the bill processing apparatus 104, and provide the bill processing apparatus 104 with to-be-rerated bills. Each bill records information about apply charging AC (apply charging), and the AC information includes sorting information of the AC and reservation amount information corresponding to the AC. In a specific embodiment, the sorting information of the AC may include a start time of the AC or a unique serial number of the AC, and the reservation amount information corresponding to the AC may specifically include duration information (for example, 5 minutes) corresponding to the AC or traffic volume information (for example, 5 M) corresponding to the AC.

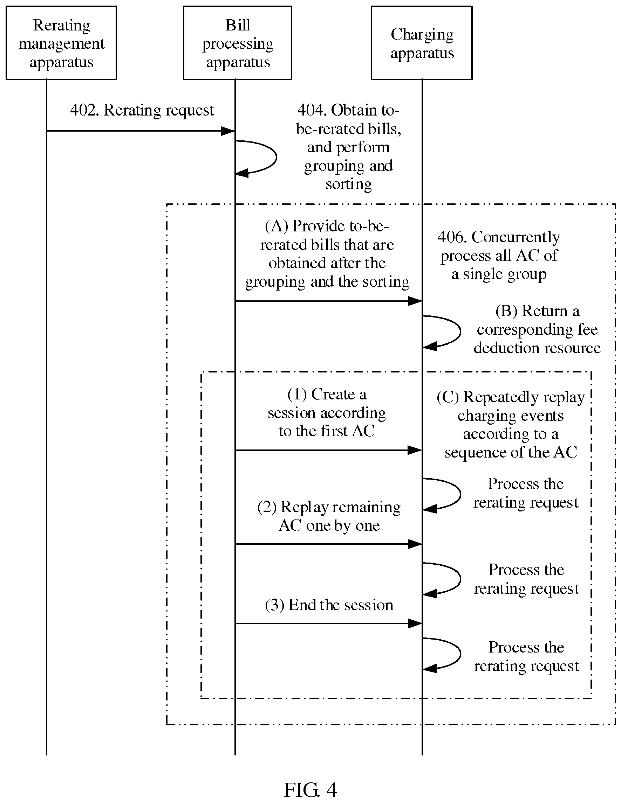

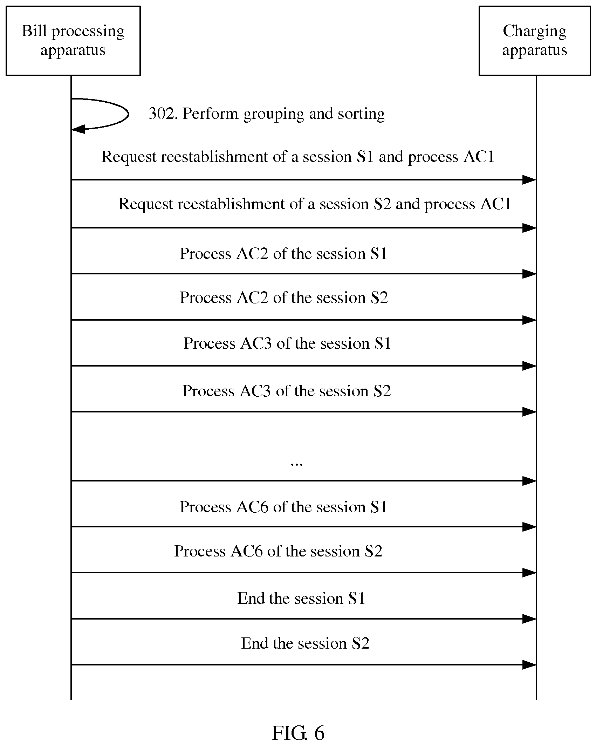

The bill processing apparatus 104 is configured to: receive the to-be-rerated bills; group the bills, where associated bills are grouped into a same group; sort all AC in bills of a same group according to the sorting information of all the AC in the same group; and provide the charging apparatus with all the sorted AC in the bills of the same group, so that the charging apparatus rerates the bills of the same group according to the sorting and the reservation amount information of all the AC on a basis of each of all the AC. In a specific application, the associated bills may specifically include bills of a same account, bills of a same community, or bills of a same customer, or bills having another association relationship that is set according to a corresponding policy, so as to ensure that fee deduction of a same account or associated accounts are rerated together. In a specific embodiment, the bill processing apparatus 104 replays, one by one to the charging apparatus according to the sorting, AC events corresponding to all the AC in the bills of the same group. In a specific embodiment, the replay may specifically include: creating a session between the bill processing apparatus and the charging apparatus according to the first AC in the bills of the same group, and then playing, one by one, remaining AC in the bills of the same group according to the sorting. For a specific replay process, refer to the following implementation corresponding to FIG. 4 or FIG. 6.

The charging apparatus 106 is configured to rerate the bills of the same group according to the sorting and the reservation amount information of all the AC on a basis of each of all the AC. In an actual application, the charging apparatus 106 may be specifically an apparatus that has a rating function, for example, an online charging system (Online Charging System, OCS) or a convergent billing system (convergent billing system, CBS).

It can be understood that corresponding functions of the rerating management apparatus 102, the bill processing apparatus 104, and the charging apparatus 106 may be implemented by hardware, firmware, software, or a combination thereof. In an actual application, a specific implementation is determined according to a product design requirement or manufacturing costs. The present invention should not be limited by a specific implementation. For example, the bill processing apparatus 104 may be set in the rerating management apparatus 102 (for example, set as a logical entity in the rerating management apparatus 102), or may be set in the charging apparatus 106 (for example, set as a logical entity in the charging apparatus 106), or be independent of both the rerating management apparatus 102 and the charging apparatus 106 and independently exist as a physical entity in a network.

FIG. 2 is a structural diagram applicable to a bill processing apparatus 200 according to an embodiment of the present invention. As shown in FIG. 2, the bill processing apparatus includes a receiving unit 202, a grouping and sorting unit 204, and a bill provision unit 206.

The receiving unit 202 is configured to receive a charging rerating request and obtain at least two to-be-rerated bills, where each bill records information about apply charging AC (apply charging), and the AC information includes sorting information of the AC and reservation amount information corresponding to the AC.

The grouping and sorting unit 204 is configured to: group the bills, where associated bills are grouped into a same group; and sort all AC in bills of a same group according to the sorting information of all the AC in the same group. For the determining of the association, refer to the example in the foregoing embodiment.

The bill provision unit 206 is configured to provide a charging apparatus with all the sorted AC in the bills of the same group, so that the charging apparatus rerates the bills of the same group according to the sorting and the reservation amount information of all the AC on a basis of each of all the AC.

In another embodiment of the present invention, the bill processing apparatus may further include a determining unit 208, configured to: if any two of the at least two to-be-rerated bills are not associated, instruct the grouping and sorting unit 204 to skip the grouping and sorting; and instruct the bill provision unit 206 to directly provide the charging apparatus with the at least two to-be-rerated bills, so that the charging apparatus rerates the at least two to-be-rerated bills on a basis of an entire bill.

It can be understood that corresponding functions of the receiving unit 202, the grouping and sorting unit 204, the bill provision unit 206, and the determining unit 208 may be implemented by hardware, firmware, software, or a combination thereof. In an actual application, a specific implementation is determined according to a product design requirement or manufacturing costs. The present invention should not be limited by a specific implementation.

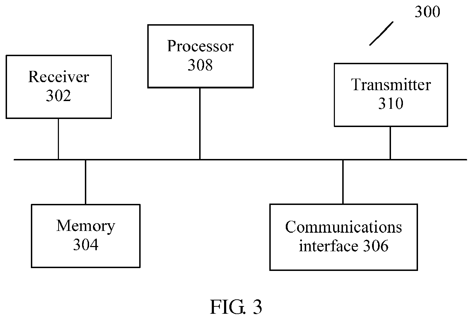

FIG. 3 is a structural diagram applicable to a bill processing apparatus 300 according to an embodiment of the present invention. As shown in FIG. 3, the bill processing apparatus 300 may include one or more receivers 302, one or more memories 304, one or more communications interfaces 306, one or more processors 308, and one or more transmitters 310, or may further include another data interaction network (used for interaction between the multiple processors and the memories, and not shown in the figure).

The receiver 302 is configured to receive a charging rerating request and obtain at least two to-be-rerated bills, where each bill records information about apply charging AC (apply charging), and the AC information includes sorting information of the AC and reservation amount information corresponding to the AC.

The memory 304 may be various types of memories, for example, a read-only memory (ROM), a static storage device, a dynamic storage device, or a random access memory (RAM). The memory 304 may store instructions and application data of an operating system and another application program, and the instructions include an instruction used for implementing a function of the bill processing apparatus in the embodiments of the present invention.

The instructions stored in the memory 304 are run and executed by the processor 308.

The communications interface 306 is configured to implement communication between the memory 304 and the processor 308, communication between processors, communication between memories, and communication between the system and another device or a communications network.

The processor 308 may execute a related program by using a general-purpose central processing unit (CPU), a microprocessor, an application-specific integrated circuit (ASIC), or one or more integrated circuits, so as to implement a function implemented by the bill processing apparatus in the embodiments of the present invention. In a specific embodiment, the processor 308 may be specifically configured to: group the bills, where associated bills are grouped into a same group; and sort all AC in bills of a same group according to the sorting information of all the AC in the same group.

The transmitter 310 is configured to provide a charging apparatus with all the sorted AC in the bills of the same group, so that the charging apparatus rerates the bills of the same group according to the sorting and the reservation amount information of all the AC on a basis of each of all the AC.

The following further describes the present invention in detail by using specific process embodiments. It should be noted that not all steps or functions in the following embodiment are necessary, and a sequence of the steps is merely for the ease of description. The sequence of the steps is not particularly limited unless otherwise required according to a principle of the solution of the present invention. Specific implementations in the steps are merely used for illustration, and constitute no particular limitation to the protection scope of the present invention. After reading through the entire specification of the present invention, a person skilled in the art may make a corresponding addition or deletion or make non-creative modification or replacement on the steps according to an actual situation, or form different embodiments by combining different implementations of the steps and implementations of other steps. These are within the recorded and disclosed scope of the present invention.

FIG. 4 is a rerating process according to an embodiment of the present invention. This embodiment is executed by the rerating management apparatus 102, the bill processing apparatus 104, and the charging apparatus 106 in FIG. 1, the bill processing apparatus 200 mentioned in the embodiment described in FIG. 2, and the bill processing apparatus 300 described in FIG. 3.

The rerating process may specifically include the following steps.

Step 402: A rerating management apparatus sends a rerating request to a bill processing apparatus and sends to-be-rerated bills to the bill processing apparatus.

Step 404: The bill processing apparatus obtains the to-be-rerated bills and groups and sorts the to-be-rerated bills.

In a specific implementation, the bill processing apparatus may group associated bills into a same group, and the associated bills may specifically include bills of a same account, bills of a same community, bills of a same customer, or the like.

In a specific implementation, the to-be-rerated bills further record information about apply charging AC (apply charging), and the AC information includes sorting information of the AC and reservation amount information corresponding to the AC.

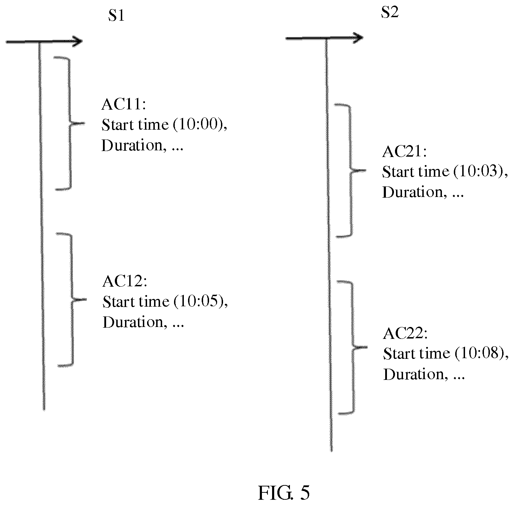

FIG. 5 provides an embodiment of a specific bill. Specifically, referring to FIG. 5, two bills S1 and S2 are included. In this embodiment, the bills S1 and S2 are associated and are grouped into a same group. S1 includes multiple AC (for example, AC11 and AC12), and S2 also includes multiple AC (for example, AC21 and AC22). Each AC records sorting information corresponding to the AC and reservation amount information corresponding to the AC. The sorting information in this embodiment is specifically a start time of each AC, and the reservation amount information is duration information of each AC. As shown in FIG. 5, each AC includes a start time (for example, a start time in AC11 is 10:00, and a start time in AC21 is 10:03) and duration information corresponding to the AC. In another implementation, the sorting information of the AC may be a unique serial number corresponding to the AC, and the reservation amount information of the AC may be a reservation traffic volume (for example, 5 M) corresponding to the AC. It can be understood that other information may be further used for AC sorting and used as reservation information for rating.

In a specific implementation, the bill processing apparatus sorts all AC in bills of a same group according to the sorting information of all the AC in the same group.

For example, in the embodiment shown in FIG. 5, the bill processing apparatus performs sorting according to start time of all the AC (AC11, AC12, AC21, and AC22) in the bills (S1 and S2) of a same group, and a result obtained after the sorting is: AC11, AC21, AC12, and AC22.

Step 406: Concurrently process all AC in all the bills of a single group.

A specific implementation may include the following substeps:
Step (A): The bill processing apparatus provides a charging apparatus with to-be-rerated bills that are obtained after the grouping and the sorting.
Step (B): The charging apparatus returns a corresponding fee deduction resource according to the to-be-rerated bills provided by the bill processing apparatus.
Step (C): The bill processing apparatus repeatedly plays charging events according to a sequence of the AC, for example, replays AC events at an AC level. In a specific process, all the AC in the group may be replayed to the charging apparatus according to the sorting in step 404. For details, refer to the substeps (1) to (3).

Step (1): Create a session between the bill processing apparatus and the charging apparatus according to the first AC. FIG. 5 is used as an example for description. The session is created between the bill processing apparatus and the charging apparatus according to the first AC11 in the bills S1 and S2 of a same group, and an AC11 event is played to the charging apparatus. The charging apparatus processes a rerating request according to the played event. A specific implementation may include: The charging apparatus performs rerating processing according to the played AC event (for example, AC11 in FIG. 5), that is, reservation amount information, for example, 5-minute duration, included in the event.
Step (2): The bill processing apparatus plays remaining AC events to the charging apparatus one by one, and the charging apparatus performs rerating processing one by one according to the AC events that are played one by one.
   For example, in FIG. 5, the bill processing apparatus then plays AC21, AC12, and AC22 to the charging apparatus one by one. Correspondingly, the charging apparatus processes rerating requests one by one according to the AC events that are played one by one. For a specific process, refer to the following description in FIG. 6.
Step (3): After all the AC in the bills of a same group is played, the session between the bill processing apparatus and the charging apparatus ends.

According to the implementation, the charging apparatus does not perform rerating for a single complete bill, but performs rerating according to a real time sequence that is of charging events and that is simulated by the bill processing apparatus. In this way, during rerating, rerating can be accurate to an AC level according to time sequences of all the AC in online charging. This resolves a problem of an inaccurate charging result caused by inconsistency between contention for a same resource by multiple charging events in rerating and that in online charging.

FIG. 6 shows a specific implementation process provided in the present invention: The bill processing apparatus plays AC events to the charging apparatus one by one, and the charging apparatus performs rerating processing one by one according to the AC events that are played one by one. Specifically, the following steps may be included.

The bill processing apparatus groups and sorts to-be-rerated bills.

Because AC1 in the bill S1 in the same group is the first AC, the bill processing apparatus initiates, according to the AC1 in the bill S1, a request for reestablishing a session 1 to the charging apparatus, and processes a session of the AC1.

Then, the bill processing apparatus initiates, according to a sorting result, a request for reestablishing a session 2 to the charging apparatus, and processes a session of AC1 (AC1 of S2).

By analog, the bill processing apparatus processes AC2 of the session 1, AC2 of the session 2, AC3 of the session 1, AC3 of the session 2, AC4 of the session 1, AC4 of the session 2, AC5 of the session 1, AC5 of the session 2, AC6 of the session 1, and AC6 of the session 2, and ends the session 1 and the session 2.

This implementation process ensures that a sequence of AC in an online rating process is fully reproduced during rerating. In FIG. 6, when free resources of only 20 minutes are available, the resources can be requested only by the first four AC and each AC can obtain free resources of 5 minutes for reservation and fee deduction (it is assumed that reservation amount information of each AC is 5-minute duration). This effectively prevents inconsistency that is between a rerating result and an online charging result and caused by a time sequence problem, and implements consistency between a result obtained after a customer performs rerating without changing any configuration and a result obtained before the rerating. Therefore, rerating accuracy and rerating mechanism reliability are improved.

Through the descriptions of the foregoing embodiments, a person of ordinary skill in the art should understand that, all or a part of the steps of the method according to the foregoing embodiments may be implemented by a program instructing relevant hardware. The program may be stored in a computer readable storage medium. When the program is run, the steps of the method according to the foregoing embodiments are performed. The storage medium may be a ROM/RAM, a magnetic disk, an optical disk, and the like.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A charging rerating method, comprising:
receiving, by a bill processing apparatus, a charging rerating request;
obtaining, by the bill processing apparatus, at least two to-be-rerated bills, and grouping the bills, wherein associated bills are grouped into a same group, each bill records information about apply charging AC, and the AC information comprises sorting information of the AC and reservation amount information corresponding to the AC;
sorting, by the bill processing apparatus, all AC in bills of a same group according to the sorting information of all the AC in the same group; and
providing, by the bill processing apparatus, a charging apparatus with all the sorted AC in the bills of the same group, so that the charging apparatus rerates the bills of the same group according to the sorting and the reservation amount information of all the AC on a basis of each of all the AC.

2. The method according to claim 1, wherein the providing, by the bill processing apparatus, a charging apparatus with all the sorted AC in the bills of the same group specifically comprises: replaying, one by one by the bill processing apparatus to the charging apparatus according to the sorting, AC events corresponding to all the AC in the bills of the same group.

3. The method according to claim 2, wherein the replaying, one by one according to the sorting, AC events corresponding to all the AC in the bills of the same group specifically comprises: creating a session between the bill processing apparatus and the charging apparatus according to a first AC in the bills of the same group, and then playing, one by one, remaining AC in the bills of the same group according to the sorting.

4. The method according to any one of claims 1 to 3, wherein the reservation amount information corresponding to the AC specifically comprises duration information corresponding to the AC or charging traffic volume information corresponding to the AC.

5. The method according to any one of claims 1 to 4, wherein the method comprises: if any two of the at least two to-be-rerated bills are not associated, skipping performing the grouping and sorting processing, and directly providing the charging apparatus with the at least two to-be-rerated bills, so that the charging apparatus rerates the at least two to-be-rerated bills on a basis of an entire bill.

6. The method according to any one of claims 1 to 5, wherein the associated bills comprise bills of a same account, bills of a same community, or bills of a same customer.

7. The method according to any one of claims 1 to 6, wherein the sorting information of the AC comprises a start time of the AC, and the sorting all AC in bills of a same group according to the sorting information of all the AC in the same group specifically comprises: sorting all the AC in the bills of the same group according to start time of all the AC in the same group.

8. The method according to any one of claims 1 to 6, wherein the sorting information of the AC comprises a unique serial number of the AC, and the sorting all AC in bills of a same group according to the sorting information of all the AC in the same group specifically comprises: sorting all the AC in the bills of the same group according to unique serial numbers of all the AC in the same group.

9. A bill processing apparatus, wherein the bill processing apparatus is configured to perform charging rerating processing and comprises:
a receiving unit, configured to receive a charging rerating request and obtain at least two to-be-rerated bills, wherein each bill records information about apply charging AC, and the AC information comprises sorting information of the AC and reservation amount information corresponding to the AC;
a grouping and sorting unit, configured to: group the bills, wherein associated bills are grouped into a same group; and sort all AC in bills of a same group according to the sorting information of all the AC in the same group; and
a bill provision unit, configured to provide a charging apparatus with all the sorted AC in the bills of the same group, so that the charging apparatus rerates the bills of the same group according to the sorting and the reservation amount information of all the AC on a basis of each of all the AC.

10. The bill processing apparatus according to claim 9, wherein that the bill provision unit provides a charging apparatus with all the sorted AC in the bills of the same group specifically comprises: the bill provision unit replays, one by one to the charging apparatus according to the sorting, AC events corresponding to all the AC in the bills of the same group.

11. The bill processing apparatus according to claim 10, wherein the replaying, one by one, AC events corresponding to all the AC in the bills of the same group specifically comprises: creating a session between the bill processing apparatus and the charging apparatus according to the first AC in the bills of the same group, and then playing, one by one, remaining AC in the bills of the same group according to the sorting.

12. The bill processing apparatus according to any one of claims 9 to 11, wherein the reservation amount information corresponding to the AC specifically comprises duration information corresponding to the AC or charging traffic volume information corresponding to the AC.

13. The bill processing apparatus according to any one of claims 9 to 12, further comprising a determining unit, configured to: when determining that any two of the at least two to-be-rerated bills are not associated, instruct the grouping and sorting unit to skip performing the grouping and sorting processing; and
the bill provision unit is further configured to: provide the charging apparatus with the at least two to-be-rerated bills according to a result of the determining, so that the charging apparatus rerates the at least two to-be-rerated bills on a basis of an entire bill.

14. The bill processing apparatus according to any one of claims 9 to 13, wherein the associated bills comprise bills of a same account, bills of a same community, or bills of a same customer.

15. The bill processing apparatus according to any one of claims 9 to 14, wherein the sorting information of the AC comprises a start time of the AC;
that the sorting and grouping unit sorts all AC in bills of a same group according to the sorting information of all the AC in the same group specifically comprises:
the sorting and grouping unit sorts all the AC in the bills of the same group according to start time of all the AC in the same group.

16. The bill processing apparatus according to any one of claims 9 to 14, wherein the sorting information of the AC comprises a unique serial number of the AC; and
that the sorting and grouping unit sorts all AC in bills of a same group according to the sorting information of all the AC in the same group specifically comprises:
the sorting and grouping unit sorts all the AC in the bills of the same group according to unique serial numbers of all the AC in the same group.
